Europäisches Patentamt

European Patent Office

Office européen des brevets

(11) Publication number: **0 131 357**
**B1**

## EUROPEAN PATENT SPECIFICATION

(45) Date of publication of patent specification: **06.02.91**

(51) Int. Cl.⁵: **G 05 B 19/06**

(21) Application number: **84303317.6**

(22) Date of filing: **16.05.84**

(54) **Control Apparatus.**

(30) Priority: **16.05.83 JP 84103/83**

(43) Date of publication of application:
**16.01.85 Bulletin 85/03**

(45) Publication of the grant of the patent:
**06.02.91 Bulletin 91/06**

(84) Designated Contracting States:
**AT BE CH DE FR GB IT LI LU NL SE**

(56) References cited:
**EP-A-0 111 992**
**EP-A-0 124 406**
**GB-A-2 073 449**
**GB-A-2 120 815**

(73) Proprietor: **Koyo Denshi Kogyo Kabushiki Kaisha (Koyo Electronics Industries Co. Ltd.)**
**171 Tenjincho-1-chome**
**Kodaira-shi Tokyo (JP)**

(72) Inventor: **Goto, Yuichi**
**2-27-5 Tobitacho**
**Chofu-shi Tokyo (JP)**

(74) Representative: **Arthur, George Fitzgerald et al**
**KILBURN & STRODE 30, John Street**
**London WC1N 2DD (GB)**

Courier Press, Leamington Spa, England.

## Description

The present invention relates to a control apparatus of the multi-level setting type, which may be used to provide signals for the control of operations of various machines such as bottle filling machines, multi-spindle drilling machines, adhesive applying machines and electrical component winding machines. More particularly, the present invention relates to a control apparatus so designed that the pulses generated in accordance, for example, with the rotational angle or the linear travel distance of a shaft, such as the pulses from a rotary encoder, are counted and a control signal is generated when a predetermined given count is attained.

Conventional control apparatuses of this type are mechanically constructed by using cam switches, limit switches or the like and therefore the construction on the whole tends to be complicated and large. Also, there are various disadvantages in that such apparatus is low in speed, limited in accuracy, and unreliable due to such phenomena as mechanical wear, vibration, use of packing and switching play, and that handling of the apparatus is troublesome because the cam switches must be changed when changing the stages of work or the like.

The present invention has been made in view of the foregoing deficiencies in the prior art and it is the object to provide a control apparatus which is capable of electrically setting and storing a plurality of preset values, thus increasing the number of preset values and the number of output points, increasing the speed, improving the accuracy, and decreasing the size of the apparatus. The previously necessary maintenance when using mechanical systems is eliminated and the time consuming adjustment is replaced by simple programming e.g. by means of a keyboard. Moreover reprogramming is possible during operation.

According to the present invention there is provided control apparatus for selectively actuating a plurality of outputs in dependence on the position of a movable member, the apparatus comprising a counter for counting pulse signals indicative of the position of the movable member, preset value input means for inputting data identifying respective ones of said plurality of outputs and count values corresponding to the respective outputs, mode selection means for selecting between a data setting mode and an operating mode, data transfer means, preset value storage means, comparison means, output command means, and an output circuit, the data transfer means acting in said data setting mode to transfer from said preset value input means to said preset value storage means said data identifying said respective outputs and the corresponding count values, and acting in said operating mode to transfer from said preset value storage means both to said command means said data identifying said respective outputs, and to said comparison means the count values corresponding to the respective outputs, said comparison means acting firstly to identify two adjacent preset count values which are respectively higher and lower than the current count in said counter, and secondly to transmit a signal to said output command means when said current count in said counter becomes equal to one of said two adjacent preset count values, the said output command means responding to said signal and to the data transferred to it by said data transfer means to cause the output circuit to actuate the output corresponding to said one of said two adjacent preset count values.

Preferably, in said operating mode, said comparison means determines whether or not a current value from said counter is intermediate between two of said preset values read from said preset value storage means which are close in magnitude to each other whereby said two comparison preset values are stepped up when said current value is not intermediate between said two preset values, and an operation of detecting the presence of equality between said current value from said counter and either one of said two preset values is performed when said current value is intermediate between said two preset values.

Also according to the invention position control apparatus, incorporating the control apparatus defined above, further comprises:

a reference point input circuit for receiving a reference point signal;

reference point value data storage means for storing the reference point value and each of the preset values;

reference point value data transfer means for replacing the value of the counter with the reference point value when supplied through the reference point input circuit;

the comparison means being operable to compare the counted value from the counter with the relative position value supplied through the reference point input circuit to generate a return direction output signal;

the output command means being responsive to the return direction output signal to select a preset position value between the counted value and the reference point value.

Preferably said reference point signal is applied from said reference point input circuit in a circumferential operation mode, said comparison means performs an operation of replacing the value of said counter with said reference point value and correcting the output states in accordance with a deviation from said reference point value.

Thus, as compared with the prior art apparatus including cam switches, limit switches or the like, with the counter apparatus of this invention it is possible not only to reduce the size and simplify the apparatus but also provide a large number of preset values corresponding to the stages of work, thus making easy the setting, adjustment and modification of detection positions, and ensuring the detection of positions with a high degree of accuracy. Also, with the invention the discrete hardware construction of a counter for example a counter comprising integrated circuits formed by flip-flop circuits, which is a self-contained unit as opposd to a software counter function within a microprocessor, makes possible the counting at a high speed, due to the elimination of inherent lag in the software type of counters which are integral with C.P.U.'s and the visual confirmation of the current position, output actuating positions (detection positions), output states etc., is made possible.

The invention may be carried into practice in various ways but certain specific embodiments will now be described by way of example, with reference to the accompanying drawings, in which:—

Figure 1 is an overall construction diagram showing the construction of the present invention.

Figure 2 is a block diagram showing an embodiment of the invention.

Figure 3 is a flow chart showing the operation of the apparatus of Figure 2.

Figure 4 is a conceptual diagram for explaining the comparison method by the flow chart of Figure 3.

Figure 5 is a flow chart showing another operation of the apparatus.

Figure 6 is a conceptual diagram of the comparison method according to the flow chart of Figure 5.

Figure 7 is a functional block diagram showing another embodiment of the apparatus according to the invention.

Figure 8 is a block diagram of a construction for realizing the functions of Figure 7.

Figure 9 is a flow chart showing the operation of reference point value correction by the apparatus shown in Figures 7 and 8.

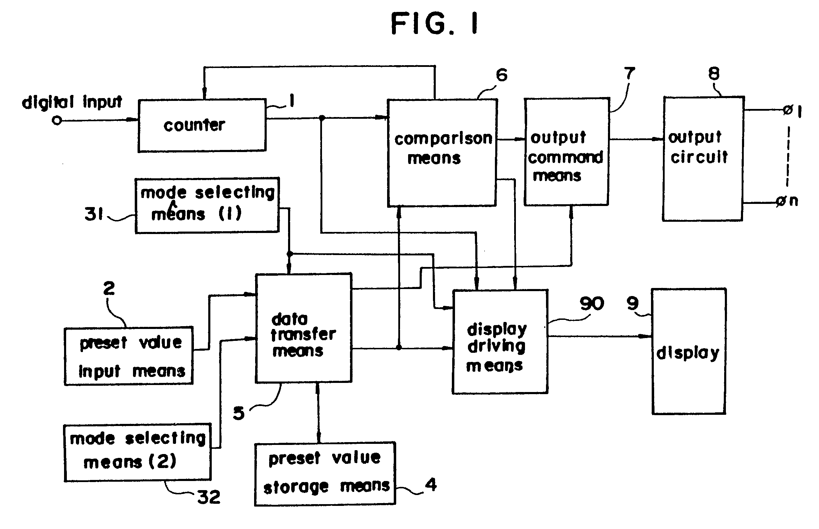

Fig. 1 is an overall construction diagram showing the construction of the present invention. In the Figure, numeral 1 designates a counter adapted for counting for example the pulse signals applied from an encoder which is not shown and having a hardware construction (discrete construction). Numeral 2 designates preset value input means adapted to input the respective preset number (control outputs $\phi_1$ to $\phi_n$) and the corresponding preset numbers and comprising for example a keyboard. Numeral 31 designates first mode selecting means adapted to select at least an operating mode and a setting mode and generates a signal indicative of each of the modes. Here, the operating mode is the ordinary operating operation system and the setting mode is an operation system for writing the respective preset numbers and the corresponding preset values in preset value storing means 4. Numeral 32 designates second mode selecting means adapted to select an operation on a shaft and a circumferential operation (cyclic operation) and supplies a signal indicative of each of the modes to data transfer means 5 in the operating operation.

The preset value storage means 4 is connected to the data transfer means 5, adapted to store a large number of preset values corresponding to the respective preset numbers and comprising for example a random access memory (RAM). The data transfer means 5 is connected to the preset value input means 2, the second mode selecting means 32 and the preset value storage means 4 and adapted so that the preset numbers and the corresponding preset values from the preset value input means 2 are stored in the preset value storage means 4 in the setting mode and the comparison preset values and the output command contents read from the storage means are supplied to comparison means 6, output command means 7, etc., in the operating mode. The comparison means 6 compares the output of the counter 1 and the comparison preset values transferred from the data transfer means 5 as to relative magnitude and equality and supplies a signal corresponding to the result of the comparison to the output command means 7. In the case of the circumferential operation, the counter value is compared with a predetermined cyclic value by the comparison means 6 so that the value of the counter 1 is reset each time it attains the cyclic value. The output command means 7 is responsive to the output (coincidence signal) from the comparison means 6 and the signal from the data transfer means 5 to deliver a control output (on or off) signal to the corresponding output number of an output circuit.

8. Numeral 9 designates a display unit, and 90 display driving means for the display unit so designed that the output (count value) of the counter 1, the preset values from the data transfer means 5 and the respective control output states (on or off) are applied and displayed in the form of digital values or the like on the display 9.

In Fig. 1, the data transfer means 5, the display driving means 90 and the output command means 7 are provided by a read only memory (ROM) preliminarily storing programs and a microprocessor operable in accordance with the programs. The comparison means 6 may also be provided by the ROM and the microprocessor or alternatively it may be comprised of a separate comparison computing unit.

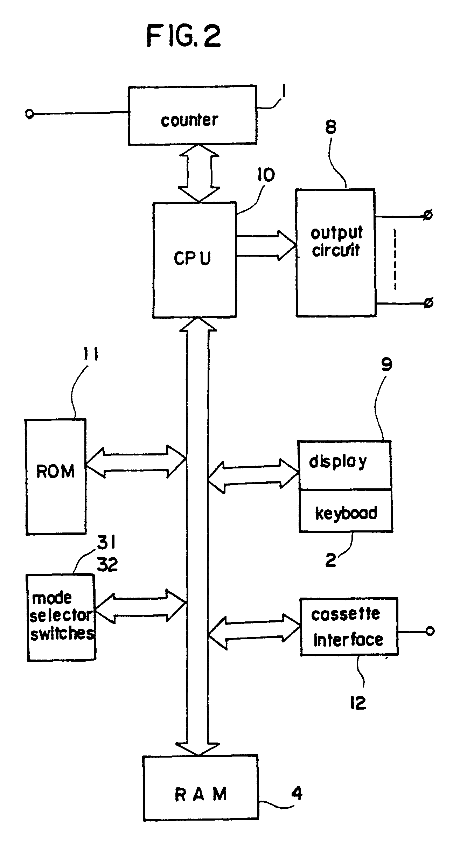

Referring now to Fig. 2, numeral 1 designates a counter adapted to count input pulse signals and containing comparators corresponding to the comparison means 6 for comparing the result of the counting with comparison preset values. Numeral 10 designates a microprocessor connected to the counter 1 and adapted to perform various computational operations in accordance with the programs stored in a ROM 11. The microprocessor 10 functions as the data transfer means 5, the output command means 7 and the display driving means 90 of Fig. 1, and connected to the microprocessor 10 through data buses are a keyboard 2 corresponding to the preset value input means 2 of Fig. 1, mode selector switches 31 and 32, a RAM 4 corresponding to the preset value storage means 4 of Fig. 1, a display 9 and a cassette interface 12 for recording the necessary programs on a cassette tape or automatically reading the programs from a tape. Also connected to the microprocessor 10 is an output circuit 8 for delivering a control output in accordance with the comparison result of the comparator in the counter 1.

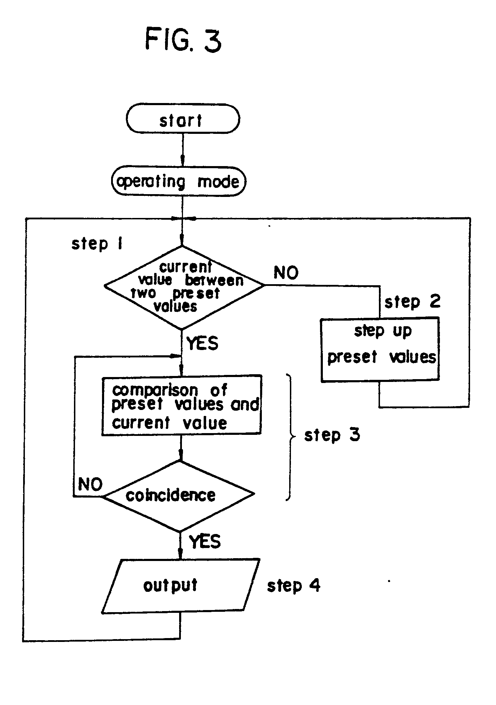

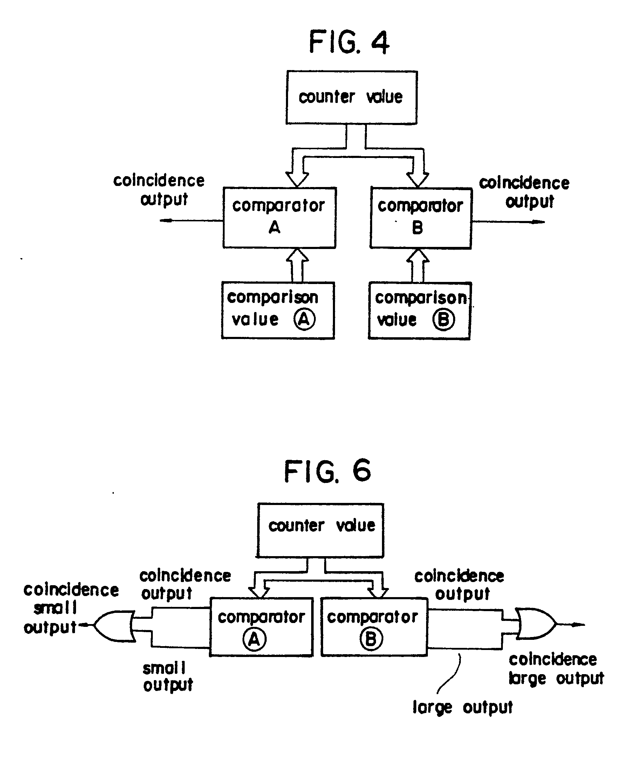

With the construction described above, the operation of the apparatus will now be described with reference to the flow chart of Fig. 3 and the comparison method explanatory diagram of Fig. 4. Here, the description will be made with reference to a case where the operating mode is selected by the first mode selector switch 31 and the operation on the shaft is selected by the second selector switch 32.

Firstly, where the operating mode is selected, the two preset values close in magnitude to each other are selected from the preset values read from the preset value storage means or RAM 4. Here, the preset comparison value of a smaller value is represented by Ⓐ and the preset comparison value of a greater value is represented by Ⓑ.

The comparison means 6 (incorporated in the counter 1 in Figure 2), compares the counter value of the counter 1 with the comparison values Ⓐ and Ⓑ so as to determine whether the counter value is intermediate between the values Ⓐ and Ⓑ, that is, whether there is a relation of Ⓐ< counter value <Ⓑ (a step 1). If the step 1 results in "NO", the flow transfers to a right-side step 2 where the comparison values are changed (this is referred to as a preset value step-up). In other words, when the comparison value Ⓐ< the comparison value Ⓑ< the counter value, one of the preset values which is greater than and close to the comparison value Ⓑ is then made the new comparison value B and the preset value which was previously the comparison value Ⓑ is now made comparison value Ⓐ. Also, when the counter value < the comparison value Ⓐ< the comparison value Ⓑ, then one of the preset values which is smaller than and close to the comparison value Ⓐ is made the new comparison value Ⓐ and the preset value which was previously the comparison value A is now made the comparison value Ⓑ.

After the completion of the step 2, the flow returns to the step 1 so that the steps 1 and 2 are performed repeatedly until it is determined that the comparison value Ⓐ< the counter value < the comparison value Ⓑ, that is, the counter value (the current value) is intermediate between the two preset values. Thus, when the decision of the step 1 becomes "YES", the preset value step-up is stopped and the flow transfers to a step 3. At the step 3, the preset values are compared with the counter value (the current value). Fig. 4 shows a conceptional diagram of this condition. The counter value is varied in accordance with the digital input so that when it is detected that the counter value has become equal to the comparison value Ⓐ or Ⓑ, that is, equality is found between the counter value and the comparison value Ⓐ or Ⓑ, a coincidence output is generated from the comparator A or B (a step 4).

When the coincidence output is generated from the comparator A or B, the comparison means 6 applies a control output corresponding to that preset value to the display 9 via the display driving means 90 (incorporated in the CPU in Figure 2) and to the output circuit 8 via the output command means 7 (also incorporated in the CPU in Figure 2). When the step 4 is completed, the flow in Figure 3 returns to the step 1 and the abovementioned operations are repeated.

While the foregoing description has been made with reference to the case where the operation on the shaft is selected, the following operations are performed if the circumferential operation (the cyclic or rotary direction operation) is selected. Where the comparison value Ⓑ has the maximum value among the preset values (corresponding to the rotation in the forward direction), if equality is found between the counter value and the comparison value Ⓑ and an output is generated, the following preset value step-up causes the comparison value Ⓑ to assume the minimum value among the preset values. On the other hand, where the comparison value Ⓐ has the minimum value among the preset values (corresponding to the rotation in the reverse direction, if the counter value becomes equal to the comparison value Ⓐ, then the preset value step-up causes the comparison value Ⓐ to assume the maximum value among the preset values. By thus modifying the program, it is possible to effect the similar operations as in the case of the counter operation on the shaft.

While the foregoing description has explained the operations in the condition where the operating mode or the principal operation of the microprocessor 10 is selected, it is conceivable to preset such modes as stop, adjusting, setting and cassette modes in addition to the operating mode. In this case, the stop mode stops the operation of the apparatus as a whole, and the adjusting mode modifies for example the preset values stored in te RAM 4. The adjusting mode writes the modified data in the RAM 4 through the keyboard 2 during the continued operation. Also, in the cassette mode, programs, recorded on a cassette tape, are written in the RAM 4 from the cassette tape through the cassette interface 12. The cassette mode is effective in cases where the same programs are written in the RAM 4 of each of a large number of apparatuses.

By thus making possible the selection of a variety of modes by the mode selecting switches 31 and 32, it is possible to ensure the performance of a variety of operations and improve the versatility of the apparatus.

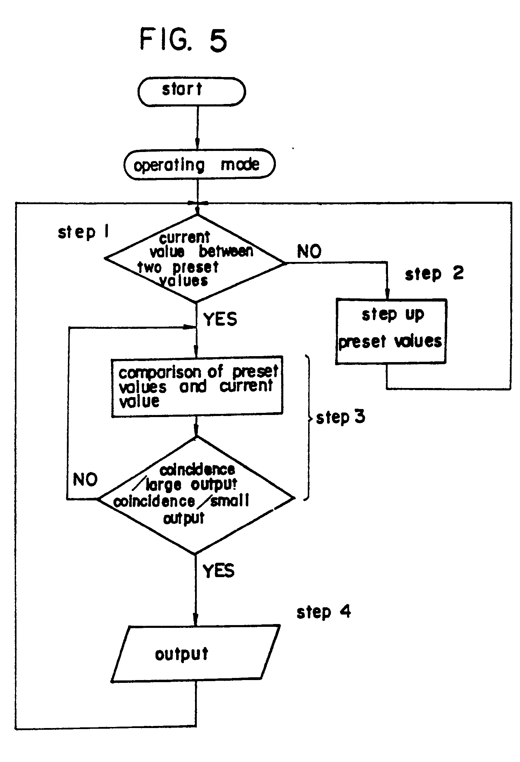

Fig. 5 is a flow chart showing another operation of the apparatus according to the invention. With the steps 3 and 4 of the flow chart shown in Fig. 3, some time is required before a coincidence signal is generated and a control signal is generated from the output circuit 8 since the step-up is effected through the microprocessor 10. Thus, if the counter speed is increased for the purpose of high speed operation, there is the danger of a situation arising in which, during the time that the preset values are stepped up and the values of the comparison values Ⓐ and Ⓑ are changed, the actual counter value is increased further and thus no coincidence signal is generated. This tends to occur frequently in cases where every two successive preset values are preset close to each other. The flow chart shown in Fig. 5 improves on this point. More specifically, while, in Fig. 3, the step 3 compares the comparison values Ⓐ and Ⓑ with the counter value (the current value) to generate only a coincidence output, in Fig. 5 the step 3 causes the comparator A to generate a small output in addition to a coincidence output and thereby generate a coincidence small output when the counter value $\leqq$ the comparison value Ⓐ. Also, the comparator B generates a large output in addition to a coincidence output and thereby generates a coincidence large output when the counter value $\geqq$ the comparison value Ⓑ.

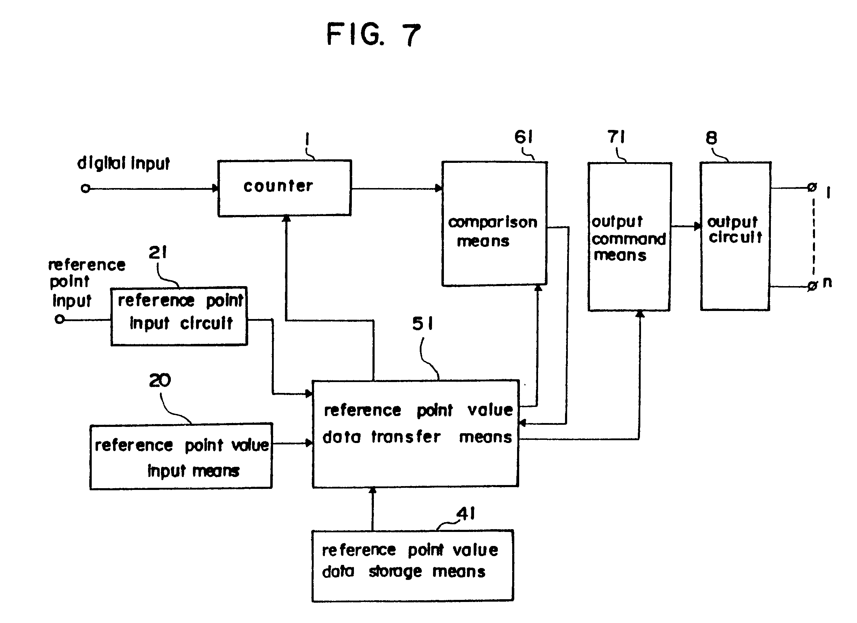

Fig. 6 is a conceptional diagram showing the comparison method according to the flow chart of Fig. 5. In accordance with this comparison method, the comparator A (or the comparator B) generates two signals, a coincidence output and a large output (or a small output), and an OR output of the two signals is generated as a coincidence large (or small) output. Thus, even if the counter value varies very rapidly, a coincidence signal is generated positively. For instance, even when the comparison value Ⓐ< the comparison value Ⓑ< the counter value, a coincidence signal is generated from a coincidence output and a large output so that the output processing of the contents determined by the comparison value Ⓑ is performed and the corresponding control output is positively applied to the output circuit.

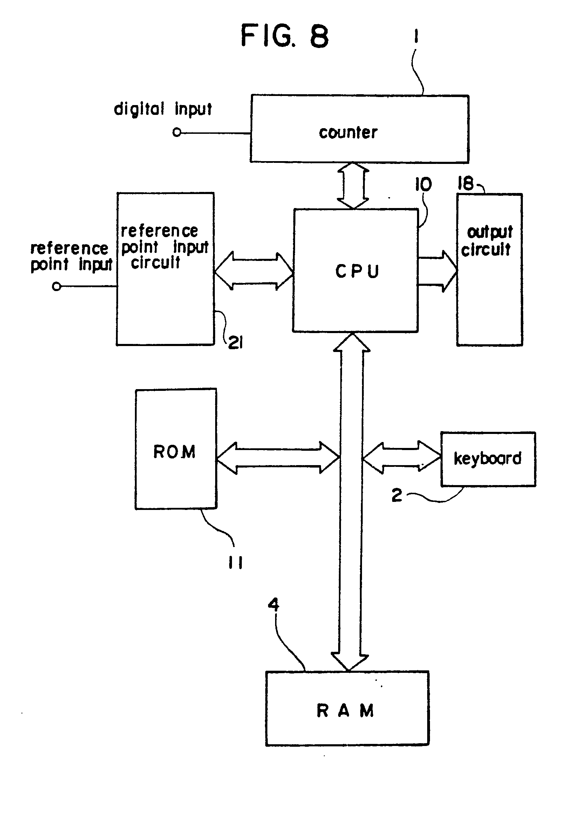

Fig. 7 is a functional block diagram showing still another embodiment of the apparatus according to the invention and Fig. 8 is a block diagram showing a construction for realizing the functions shown in Fig. 7. Where the digital input applied to a counter 1 comprises pulse signals generated in relation to a rotational motion, the counter value of the counter 1 indicates a rotational angular position from a given reference point and this value is returned to the reference point corresponding to an absolute position each time the rotary member makes one rotation. In fact, however, there are cases where the counter value deviates and fails to conform to the reference value at the actual reference point position due to a slip of the rotary member, vibration noise or due to a change of the reference point position. Thus, in such a case, it is necessary to arrange so that a reference point signal is applied externally and a reference point position is written into the counter 1 thereby correcting the reference point value and also correct the output condition.

The embodiment shown in Fig. 7 further takes these points into consideration. While, in Figs. 7 and 8, only the essential blocks are shown, it is assumed that all the blocks of Fig. 1 are incorporated in the embodiment. The apparatus of this embodiment differs from the apparatus of Figs. 1 and 2 in that it further includes a reference point input circuit 21 which is supplied with a reference point signal, reference point value input means 20 for inputting a reference point value, reference point value data storage means 41 for storing the reference point value and a comparison value of a return direction to the reference point value (the clockwise or counterclockwise direction), and reference point value data transfer means 51 connected to the reference point input circuit 21, the reference value input means 20 and the reference point value data storage means 41. In this embodiment, the reference point value input means 20 is incorporated in the keyboard 2 and the reference point value data storage means 41 is incorporated in the RAM 4. Also, the reference point value data transfer means 51 is provided by the microprocessor 10 such that the reference point value from the reference point value input means 20 is written into the reference point value storage means 41 and also the reference point value, a return-direction comparison value (this value may be represented by the reference point value plus the cyclic value/2) and an output command content are generated. Comparison means 61 compares the output of the counter 1 and the return-direction comparison value from the reference point value data transfer means 51 to generate a direction output signal. Also, output command means 71 is responsive to the return-direction output from the reference point value data transfer means 51 to perform an output operation for the range from the current value to the reference point value. These operations of the comparison means 61 and the output command means 71 are performed in addition to the operations of their counterparts shown in Fig. 1.

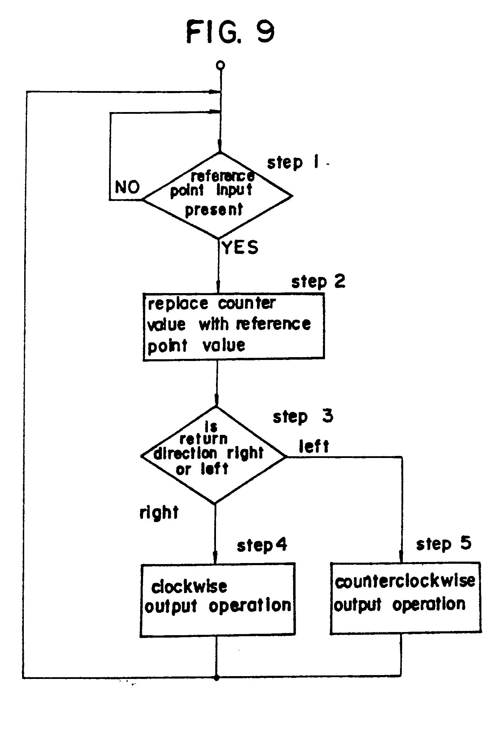

Fig. 9 is a flow chart showing the operation of correcting the reference point value in the apparatus shown in Figs. 7 and 8 and this operation is performed in a case where the circumferential operation (cyclic operation) mode is selected. Firstly, the reference point value data transfer means 51 detects the application of a reference point input signal (a signal generated from a limit switch or the like arranged at the reference point position of the rotary member) through the reference point input circuit 21 (a step 1). When the reference point input signal is detected, the then current value of the counter 1 (the value which assumes a positive value $n_{21}$ ($n_{21} > n_0$) or a negative value $n_{22}$ ($n_{22} < n_0$) in dependence on its deviation from the reference point if the proper value (the cyclic value) at the reference point is represented as $n_0$) is replaced with the reference point value $n_0$ (a step 2). Then, a decision is made as to whether at the step 2 the direction of return to the reference point value $n_0$ tends in the direction from $n_{21}$ to $n_0$ (this is regarded as a counterclockwise direction) or from $n_{22}$ to $n_0$ (this is regarded as a clockwise direction) (a step 3). If the step 3 determines that the return direction is the clockwise direction, the clockwise operation or the same output process as if the counter value were varied from $n_{22}$ to $n_0$ (if there

are any preset values between $n_0$ and $n_{22}$, the output operation corresponding to these preset values) is performed (a step 4). On the contrary, if the step 3 determines that the return direction is the counterclockwise direction, the counterclockwise operation or the same output process as if the counter values $n_{21}$ were varied to $n_0$ is performed (a step 5). When the step 4 or 5 is over, the flow returns to the step 1.

Where the pulse signals generated in relation to the rotational movement of a rotary member are counted, any deviation of the reference value at the reference point position can be corrected by a series of operations as mentioned above. Further, in accordance with the apparatus of this embodiment the operation on a shaft can be effected by means of the second mode selecting means in the like manner as in the case of Figs. 1 and 2.

## Claims

1. Control apparatus for selectively actuating a plurality of outputs (1 to n) in dependence on the position of a movable member, the apparatus comprising a counter (1) for counting pulse signals indicative of the position of the movable member, preset value input means (2) for inputting data identifying respective ones of said plurality of outputs and count values corresponding to the respective outputs, mode selection means (31) for selecting between a data setting mode and an operating mode, data transfer means (5), preset value storage means (4, 41), comparison means (6, 61), output command means (7, 71), and an output circuit (8), the data transfer means (5) acting in said data setting mode to transfer from said preset value input means (2) to said preset value storage means (4) said data identifying said respective outputs and the corresponding count values, and acting in said operating mode to transfer from said preset value storage means (4) both to said command means (7) said data identifying said respective outputs, and to said comparison means (6) the count values corresponding to the respective outputs, said comparison means (6) acting firstly to identify two adjacent preset count values which are respectively higher and lower than the current count in said counter (1), and secondly to transmit a signal to said output command means (7) when said current count in said counter (1) becomes equal to one of said two adjacent preset count values, the said output command means responding to said signal and to the data transferred to it by said data transfer means (5) to cause the output circuit (8) to actuate the output corresponding to said one of said two adjacent preset count values.

2. Control apparatus as claimed in claim 1 including selecting means (32) for selecting between at least an operating mode and a setting mode.

3. Control apparatus as claimed in Claim 1 or 2 including display means (9) for displaying the output of said counter (1) and the preset values.

4. Control apparatus according to Claim 2, wherein, in the operating mode, the two compared preset value signals are changed when the said current value is not intermediate between the two preset values, and the comparison means also being operable to detect the presence of equality between the said current value from the counter (1) and either one of the two preset values.

5. Position control apparatus incorporating control apparatus as claimed in any of claims 1 to 4 and further comprising:

a reference point input circuit (21) for receiving a reference point signal;

reference point value data storage means (41) for storing the reference point value and each of the preset values;

reference point value data transfer means (51) for replacing the value of the counter with the reference point value when supplied through the reference point input circuit;

the comparison means (61) being operable to compare the counted value from the counter (1) with the relative position value supplied through the reference point input circuit to generate a return direction output signal;

the output command means (71) being responsive to the return direction output signal to select a preset position value between the counted value and the reference point value.

6. Position control apparatus according to Claim 5, wherein when the reference point signal is accessed from the reference point input circuit (21) in a circumferential operation mode, the comparison means (61) are operable to replace the value of the counter (1) with the desired reference point value and correct the output states in accordance with a deviation from the desired reference point value.

7. Position control apparatus as claimed in Claim 5 or 6 including display means (9) for displaying the output of the counter (1) and the preset values.

## Patentansprüche

1. Steuervorrichtung zum selektiven Aktivieren einer Mehrzahl von Ausgängen (1 bis n) in Abhängigkeit von der Position eines beweglichen Elements, mit einem Zähler (1) zum Zählen von die Position der beweglichen Elements angebenden Impulssignalen, einer Voreinstellwert-Eingageeinrichtung (2) zum Eingeben von Daten, die entsprechende Ausgänge der Mehrzahl von Ausgängen identifizieren, und von Zählwerten entsprechend den jeweiligen Ausgängen, einer Betriebsart-Wähleinrichtung (31) zum Wählen zwischen einer Dateneinstell-Betriebsart und einer Arbeits-Betriebsart, einer Datenübertragungseinrichtung (5), einer Voreinstellwert-Speichereinrichtung (4, 41), einer Vergleichseinrichtung (6, 61), einer Ausgangsbefehlseinrichtung 7, 71) und einem Ausgangskreis (8), wobei die Datenübertragungseinrichtung (5) in der Dateneinstell-Betriebsart wirksam ist, um die die jeweiligen Ausgänge identifizierenden Daten und die entsprechenden Zählwerte von der Voreinstellwert-Eingabeeinrichtung (2) zur Voreinstellwert-Speichereinrichtung (4) zu übertragen, und in der Arbeits-Betriebsart wirksam ist, um von der Voreinstellwert-Speichereinrichtung (4) die die jeweiligen Ausgänge identifizierenden Daten zur Befehlseinrichtung (7) sowie die den jeweiligen Ausgängen entsprechenden Zählwerte zur Vergleichseinrichtung (6) zu übertragen, und die Vergleichseinrichtung (6) erstens wirksam ist, um zwei benachbarte voreingestellte Zählwerte, die höher bzw. niedriger als der momentane Zählstand im Zähler (1) sind, zu identifizieren, und zweitens wirksam ist, um ein Signal zur Ausgangsbefehlseinrichtung (7) zu senden, wenn der momentane Zählstand im Zähler (1) gleich einem der zwei benachbarten voreingestellten Zählwerte wird, wobei die Ausgangsbefehlseinrichtung auf dieses Signal und auf die zu ihr von der Datenübertragungseinrichtung (5) übertragenen Daten anspricht, um den Ausgangskreis (8) zu veranlassen, den Ausgang entsprechend dem einen der zwei benachbarten voreingestellten Zählwerte zu aktivieren.

2. Steuervorrichtung nach Anspruch 1, mit einer Wähleinrichtung (32) zum Wählen zwischen zumindest einer Arbeits-Betriebsart und einer Einstell-Betriebsart.

3. Steuervorrichtung nach Anspruch 1 oder 2, mit einer Anzeigeeinrichtung (9) zur Anzeige des Ausgangs des Zählers (1) und der voreingestellten Werte.

4. Steuervorrichtung nach Anspruch 2, bei der in der Arbeits-Betriebsart die zwei verglichenen Voreinstellwert-Signale geändert werden, wenn der momentane Wert nicht zwischen den zwei voreingestellten Werten liegt, und die Verleichseinrichtung auch betreibbar ist, um das Vorliegen von Gleichheit zwischen dem momentanten Wert aus dem Zähler (1) und dem einen oder anderen der zwei voreingestellten Werte festzulegen.

5. Positionssteuervorrichtung mit einer Steuervorrichtung nach einem der Ansprüche 1 bis 4, weiters mit:

einem Bezugspunkt-Eingabekreis (21) zum Empfang eines Bezugspunktsignals;

einer Bezugspunktwert-Datenspeichereinrichtung (41) zum Speichern des Bezugspunktwertes und eines jeden der voreingestellten Werte;

einer Bezugspunktwert-Datenübertragungseinrichtung (51) zum Ersetzen des Wertes des Zählers durch den Bezugspunktwert, wenn er durch den Bezugspunkt-Eingabekreis zugeführt wird;

wobei die Vergleichseinrichtung (61) betreibbar ist, um den Zählwert aus dem Zähler (1) mit dem durch den Bezugspunkt-Eingabekreis zugeführten Relativpositionswert zu vergleichen, um ein Umkehrrichtungs-Ausgangssignal zu erzeugen; und

die Ausgangsbefehlseinrichtung (71) auf das Umkehrrichtungs-Ausgangssignal anspricht, um einen voreingestellten Positionswert zwischen dem Zählwert und dem Bezugspunktwert zu wählen.

6. Positionssteuervorrichtung nach Anspruch 5, bei der vom Bezugspunkt-Eingabekreis (21) auf das Bezugspunktsignal in einer Umfangsarbeits-Betriebsart zugegriffen wird, und die Vergleichseinrichtung (61) betreibbar ist, um den Wert des Zählers (1) durch den gewünschten Bezugspunktwert zu ersetzen und die Ausgangszustände in Entsprechung zu einer Abweichung vom gewünschten Bezugspunktwert zu korrigieren.

7. Positionssteuervorrichtung nach Anspruch 5 oder 6, mit einer Anzeigeeinrichtung (9) zur Anzeige des Ausgangs des Zählers (1) und der voreingestellten Werte.

**Revendications**

1. Appareil de commande pour activer sélectivement une pluralité de sorties (1 à n) en fonction de la position d'un organe mobile, l'appareil comprenant un compteur (1) pour compter des signaux d'impulsions traduisant la position de l'organe mobile, un moyen d'entrée de valeur préréglée (2) pour introduire des données identifiant des sorties respectives de ladite pluralité et des valeurs de comptage correspondant aux sorties respectives, un moyen de sélection de mode (31) pour opérer la sélection entre un mode de réglage de données et un mode de fonctionnement, un moyen de transfert de données (5), un moyen de stockage de valeur préréglée (4, 41), un moyen de comparaison (6, 61), un moyen d'ordre de sortie (7, 71) et un circuit de sortie (8), le moyen de transfert de données (5) agissant dans le mode de réglage de données pour transférer, depuis le moyen d'entrée de valeur préréglée (2) vers le moyen de stockage de valeur préréglée (4), les données identifiant les sorties respectives et les valeurs de comptage correspondantes et agissant dans le mode de fonctionnement pour tranférer, depuis le moyen de stockage de valeur préréglée (4), à la fois vers le moyen d'ordre (7), les données identifiant les sorties respectives et vers le moyen de comparaison (6), les valeurs de comptage correspondant aux sorties respectives, le moyen de comparaison (6) agissant en premier lieu, pour identifier deux valeurs de comptage préréglées adjacentes qui sont respectivement supérieure et ifnérieure au compte courant dans le compteur (1) et en second lieu, pour transmettre un signal vers le moyen d'ordre de sortie (7) lorsque le compte courant dans le compteur (1) devient égal à l'une des deux valeurs de comptage préréglées adjacentes, le moyen d'ordre de sortie répondant à ce signal et aux données qui y sont transférées par le moyen de transfert de données (5) pour amener le circuit de sortie (8) à activer la sortie correspondant à celle des deux valeurs de comptage préréglées adjacentes qui est en question.

2. Appareil de commande suivant la revendication 1, qui comprend un moyen de sélection (32) pour opérer la sélection entre au moins un mode de fonctionnement et un mode de réglage.

3. Appareil de commande suivant la revendication 1 ou 2, qui comprend un moyen d'acffichage (9) pour afficher la sortie du compteur (1) et les valeurs préréglées.

4. Appareil de commande suivant la revendication 2, dans lequel, dans le mode de fonctionnement, les deux signaux de valeurs préréglées comparés sont modifiés lorsque la valeur courante n'est pas située entre les deux valeurs préréglées et le moyen de comparaison peut également être mis en oeuvre pour détecter la présence d'une égalité entre la valeur courante du compteur (1) et l'une ou l'autre des deux valeurs préréglées.

5. Appareil de commande de position comprenant l'appareil de commande suivant l'une quelconque des revendications 1 à 4, qui comprend, en outre:

un circuit d'entrée de point de référence (21) servant à recevoir un signal de point de référence;

un moyen de stockage de données de valeur de point de référence (41) pour stocker la valeur de point de référence et chacune des valeurs préréglées;

un moyen de transfert de données de valeur de point de référence (51) servant à remplacer la valeur du compteur par la valeur de point de référence lors de sa fourniture par l'intermédiaire du circuit d'entrée de point de référence;

le moyen de comparaison (61) pouvant être mis en oeuvre pour comparer la valeur comptée du compteur (1) à la valeur de position relative fournie par le circuit d'entrée de point de référence pour générer un signal de sortie de sens inverse;

le moyen d'order de sortie (71) réagissant au signal de sortie de sens inverse pour sélectionner une valeur de position préréglée située entre la valeur comptée et la valeur de point de référence.

6. Appareil de commande de position suivant la revendication 5, dans lequel l'accès au signal de point de référence par le circuit d'entrée de point de référence (21) est réalisé dans un mode de fonctionnement circonférentiel, le moyen de comparaison (61) pouvant être mis en oeuvre pour remplacer la valeur du compteur (1) par la valeur de point de référence souhaitée et pour corriger les états de sortie en fonction d'une déviation par rapport à la valeur de point de référence souhaitée.

7. Appareil de commande de position suivant la revendication 5 ou 6, qui comprend un moyen d'affichage (9) pour afficher la sortie du compteur (1) et les valeurs préréglées.

# FIG. I

EP 0 131 357 B1

# FIG. 2

# FIG. 3

```
            ( start )
                │
                ▼
        ( operating mode )
                │
  step 1        ▼
         ╱ current ╲
        ╱ value between ╲      NO
        ╲ two preset   ╱ ──────────────┐
         ╲  values  ╱                  │ step 2
              │                   ┌─────────────┐
            YES                   │  step up    │
              │                   │ preset values│
              ▼                   └─────────────┘
    ┌──────────────────┐                 │
    │ comparison of    │ ┐               │
    │ preset values and│ │               │
    │ current value    │ │               │
    └──────────────────┘ ├ step 3 ◄──────┘
              │          │
              ▼          │
     NO   ╱ coincidence ╲│
   ◄──────╲            ╱ ┘
              │
            YES
              │
              ▼
    ╱─────────────────╱
   ╱   output        ╱   step 4
  ╱─────────────────╱
              │
```

# FIG. 4

counter value

coincidence
output

comparator
A

comparator
B

coincidence
output

comparison
value Ⓐ

comparison
value Ⓑ

# FIG. 6

counter value

coincidence
small
output

coincidence
output

comparator
Ⓐ

comparator
Ⓑ

coincidence
output

small
output

large output

coincidence
large output

# FIG. 5

```
              ( start )
                  │
                  ▼
          ( operating mode )
                  │
  ┌───────────────┼────────────────────────────────────┐
  │               │                                     │
  │  step I       ▼                                     │
  │           ╱ current ╲                               │
  │          ╱   value between ╲        NO              │
  │          ╲  two preset     ╱──────────────┐         │
  │           ╲   values      ╱               │  step 2 │
  │            ╲     ╱                         ▼         │
  │             YES                    ┌──────────────┐ │
  │              │                     │   step up    │ │
  │              ▼                     │ preset values│ │
  │      ┌────────────────┐           └──────────────┘ │
  │      │comparison of preset│┐            │           │
  │      │values and current  │├ step 3     │           │
  │      │value               ││            │           │
  │      └────────────────┘│            │           │
  │              │         │                            │
  │              ▼         │                            │
  │          ╱ coincidence ╲                            │
  │   NO    ╱ large output  ╲                           │
  │ ◄──────╱ coincidence small╲                         │
  │         ╲    output      ╱                          │
  │          ╲      ╱                                   │
  │           YES                                       │
  │            │               step 4                   │
  │            ▼                                        │
  │       ╱───────────╱                                 │
  │      ╱  output   ╱                                  │
  │     ╱───────────╱                                   │
  │          │                                          │
  └──────────┘                                          │
  └──────────────────────────────────────────────────┘
```

FIG. 7

# FIG. 8

digital input

counter

reference point input

reference point input circuit

21

CPU

10

18

output circuit

ROM

11

keyboard

2

4

RAM

# FIG. 9

step 1

reference
point input
present

NO

YES

step 2

replace counter
value with reference
point value

step 3

is
return
direction right
or left

left

right

step 4

clockwise
output operation

step 5

counterclockwise
output operation